# EUROPEAN PATENT SPECIFICATION

(11) **EP 3 768 592 B1**
(45) Date of publication and mention of the grant of the patent: **06.12.2023**
(21) Application number: 19709082.2
(22) Date of filing: 20.02.2019
(51) Int. Cl.: B64C 29/02

(54) **A STRUCTURE CONSTRUCTION FOR AN AIRCRAFT AND AIRCRAFT COMPRISING THE STRUCTURE CONSTRUCTION**
STRUKTURKONSTRUKTION FÜR EIN FLUGZEUG UND FLUGZEUG MIT DIESER STRUKTURKONSTRUKTION
CONSTRUCTION DE STRUCTURE POUR AÉRONEF ET AÉRONEF COMPRENANT LA CONSTRUCTION DE STRUCTURE

(30) Priority: 20.03.2018 FI 20185256
(43) Date of publication of application: 27.01.2021
(73) Proprietor: Lentola Logistics Oy, 02200 Espoo (FI)
(72) Inventor: HOHENTHAL, Markus, 02200 Espoo (FI)
(74) Representative: Berggren Oy
(86) International application number: PCT/FI2019/050134
(87) International publication number: WO 2019/180304

(56) References cited:
- EP-A2- 1 057 724
- WO-A1-2017/016096
- CN-A- 105 667 783
- US-A- 5 863 013
- US-A1- 2016 200 436
- US-B1- 8 505 846

## Description

### TECHNICAL FIELD OF THE INVENTION

The invention relates to a structure construction for an aircraft and to the aircraft comprising said structure construction. The structure construction comprises first and second fuselage portions and at least one wing. In particularly the invention relates to structure for the aircraft and aircraft performing vertical take-offs and landings (VTOL machine).

### BACKGROUND OF THE INVENTION

There are known structure constructions for aircrafts having first and second fuselage portions and at least one wing structure from prior art. In addition variety of VTOL flying machines are known from prior art, such as for example helicopters, but also smallish aircraft and drones, which are lifted in the air with propellers or fans. In addition there are aircrafts known from prior art, which are lifted in the air with propellers and which take-off and land vertically, but where the propellers are in a substantially horizontal position while cruising.

One problem with this type of aircraft is nevertheless for example how to move them after take-off from a vertical position to a horizontal flight position and, respectively, from a horizontal flight position to a vertical position for landing. Although, at least in principle, such aircraft are capable of operating (take-offs and landings) on patches of quite a small area, in practice they drag over quite a long distance before the airspeed is high enough to provide the control surfaces (e.g. the elevator) with a steering force sufficient for turning the machine for example to a cruising position. Likewise, the landing also requires in practice an area which is quite large with respect to a theoretically envisaged landing area, since the turning of such aircraft in a stationary condition for example around its longitudinal axis is difficult in a controlled manner.

Selected prior art examples, attempting to solve the above stated problem, are briefly described in the following paragraphs.

Publication US 5,863,013 discloses a short field and vertical take-off and landing (STOL/VTOL) free wing aircraft comprising a fuselage with a propulsion system, a free wing connected to the fuselage, a landing gear, and a tail section mounted to a boom assembly, which is in turn pivotally connected or articulated to the fuselage. The switching between the take-off/landing and straight and level flight modes is achieved by pivoting the whole fuselage relative to the tail boom independently from pivoting of the free wing.

Publication US 2016/200436 describes an aircraft with rotors configured to function as a tri-copter for VTOL and as a fixed-wing vehicle for forward flight. A rotor, mounted to the front of the fuselage, is tilted between horizontal and vertical positions to switch between the different flight modes, while wings and fuselage are kept fixed.

Publication US 8,505,846 discloses an aircraft with a fuselage, a lifting free wing, and a nose section, pivotally mounted on the front end of the fuselage. The nose section includes an engine assembly and an engine as well as a canard free wing pivotally connected to the nose section. During the take-off and landing, the whole fuselage is vertical, with a pivoting cockpit provided for keeping the cockpit horizontal to the ground. The nose can be turned relative to the fuselage for parking, but is in line with the fuselage during take-off, landing and level flight.

Publication EP 1,057,724 discloses a convertiplane with a fuselage, a wing having a central portion fixed to the fuselage and two half-wings projecting from the fuselage, two rotors carried by supporting structures at the ends of the half-wings and two engines fixed to the half wings. The disclosed convertiplane transitions between a helicopter mode and an airplane mode by rotating the half-wings and rotors, while the fuselage stays fixed.

### SUMMARY OF THE INVENTION

An object of the invention is to alleviate and eliminate the problems and disadvantages relating to the known prior art. For example the object of the invention is to provide a structure construction for an aircraft and the aircraft so to allowing the aircraft turning for example after take-off from a vertical position to a horizontal flight or cruising position and, respectively, from a horizontal flight position to a vertical position for landing effectively so that any sloping lines are minimised and so that the aircraft would turn to and from the horizontal flight or cruising position easily, quickly and with minimal power need. Moreover the object of the invention is to provide a simple and durable structure construction for VTOL purposes, which is stable to land and to be parked on the ground, but which is still at the same time very aerodynamic with low air resistance. Further the object is to provide the structure construction so that it is easy to load and unload and that the load would be located essentially at the same position during the whole flight (including take-off, forward flying, hovering and landing).

The object of the invention can be achieved by the features of claims 1 and 13.

The invention relates to a structure construction according to claim 1. In addition the invention relates to an aircraft according to claim 13.

The structure construction of the invention for an aircraft, advantageously for aircrafts heavier than air, comprises first and second fuselage structure portions, and at least one wing. The wing might be e.g. a delta or trapeze wing, for example. In addition the wing may be configured to form at least portion of the supporting structure. In addition the structure construction comprises a supporting structure for supporting the wing and the first fuselage portion. The supporting structure or the wing is configured to be provided with at least one engine, advantageously main engine of the aircraft. The engine is advantageously an electric engine and provided with rotating propellers or fan. According to an embodiment the engine(s) produce(s) in connection with the supporting structure or wing at least 2/3 of the total thrust.

The supporting structure is configured to be hinged to the second fuselage portion so that the supporting structure allows turning of said wing, of said at least one engine and of said first fuselage portion in relation to the second fuselage portion to a take-off and landing modes or positions, and to forward flying or cruising mode. Advantageously the supporting structure, wing and the first fuselage portion are turned around the hinge as a one fixed packet or construction so that the first fuselage portion and the wing is a fixed entity or unit and not hinged or turnable in relation to each other. This makes the structure simple and very durable.

Advantageously the wing and the first fuselage portion are configured to be turned via help of the supporting structure essentially parallel to the longitudinal axis of the second fuselage portion in the forward flying mode, and in an angle, essentially perpendicular to the longitudinal axis of the second fuselage portion during landing and take-offs. This provides very aerodynamic structure, low air resistance and thus bigger air speed with relatively low engine power. In addition fuel consumption can be decreased by this structure when compared to structures known from prior art.

In addition the first fuselage portion is configured to be turned via help of said supporting structure to an upward direction in relation to said second fuselage portion during hovering, take-off and landing. According to an example the supporting structure, first fuselage portion and the wing are essentially perpendicularly in relation to the longitudinal axis of the second fuselage portion, but so that the first fuselage portion is essentially above the second fuselage portion and the second fuselage portion is at the lower level. This embodiment provides more stable structure to hovering, landing and taking off, because the center of gravity of the whole structure construction or aircraft is on a very low level for example compared to a front line of the engines or the leading edge of the wing, for example. It is to be noted that when the aircraft is parked the supporting structure may be held in the upward position or turned in the horizontal position.

According to an exemplary embodiment a cockpit and/or cabin or room for persons, as well as also main cargo is arranged in the second fuselage portion. The second fuselage portion (or its longitudinal axis) is advantageously configured to remain essentially in a horizontal position or plane both during take-off and landing as well as during flight, parking, loading and unloading. This provides very stable structure to land and to be parked on the ground, and in addition makes it easy to load and unload. In addition the cargo and the persons on the board will remain essentially at the same position during the whole flight, including also take-off and landing, which helps a lot with handling the aircraft because the position or location of the cargo as well as persons does not move or change. However, the take-off and landing positions as well as the forward flying position or mode are described more clearly in connection with the attached figures.

Further the structure construction is configured to receive an electric power source, such as batteries, to the first fuselage portion, and in particularly to the front portion of the first fuselage portion. According to an advantageous embodiment the location of at least portion of the power sources is configured to be moved or changed between the take-off, landing and/or flight modes or due to changes in loading. For example the location can be moved or changed in a direction of the longitudinal axis of the first and/or second fuselage portion, but according to an embodiment also in a lateral direction. In this way the position of the center of gravity can be changed and optimized (even during take-off, forward flying, hovering and landing) in view of the cargo or other load so that the position of the overall center of gravity is in an optimal area, or in other words so that the first and second fuselage portions are more or less in balance and that the aircraft can be controlled during take-off, forward flying, hovering and landing.

The present invention offers advantages over the known prior art, such as the supporting structure which allows easy and very fast turning of the supporting structure or the wing to the forward flight mode from the take-off position or transition to the flight position via a hovering mode, as well as opposite to the landing position from the forward flight mode. In addition the supporting structure of the invention can offer a simple and very durable structure, which is in addition very stable to land and to be parked on the ground, because the center of the gravity can be kept on an extremely low position in particularly during landing. Even if the supporting structure and the aircraft having the supporting structure is configured to perform in particularly vertical take-offs and landings, it has a highly aerodynamic structure and a low air resistance in the forward flying mode and thus enabling high airspeed with same or lower engine power than the prior art machines, which naturally decreases fuel consumption. Furthermore the aircraft of the invention is easy to load and unload, and the cargo will remain essentially at the same position during the whole flight, including also take-off and landing, because the second fuselage portion is hinged in relation to the first fuselage portion so that the second fuselage portion can remain essentially in the horizontal position during parking, landing, take-off, hovering and also during forward flying mode.

### BRIEF DESCRIPTION OF THE DRAWINGS

Next the invention will be described in greater detail with reference to exemplary embodiments in accordance with the accompanying drawings, in which:
- Figures 1A-1B: illustrate a perspective view of an exemplary aircraft having a structure construction in a forward flying mode according to an advantageous embodiment of the invention,
- Figure 2: illustrates a side view of an exemplary aircraft having a structure construction in a forward flying mode according to an advantageous embodiment of the invention,
- Figure 3: illustrates a side view of an exemplary aircraft having a structure construction in a take-off, landing and/or hovering mode according to an advantageous embodiment of the invention, and
- Figures 4A-4B: illustrate a perspective view of an exemplary aircraft having a structure construction in a take-off, landing and/or hovering mode according to an advantageous embodiment of the invention.

### DETAILED DESCRIPTION

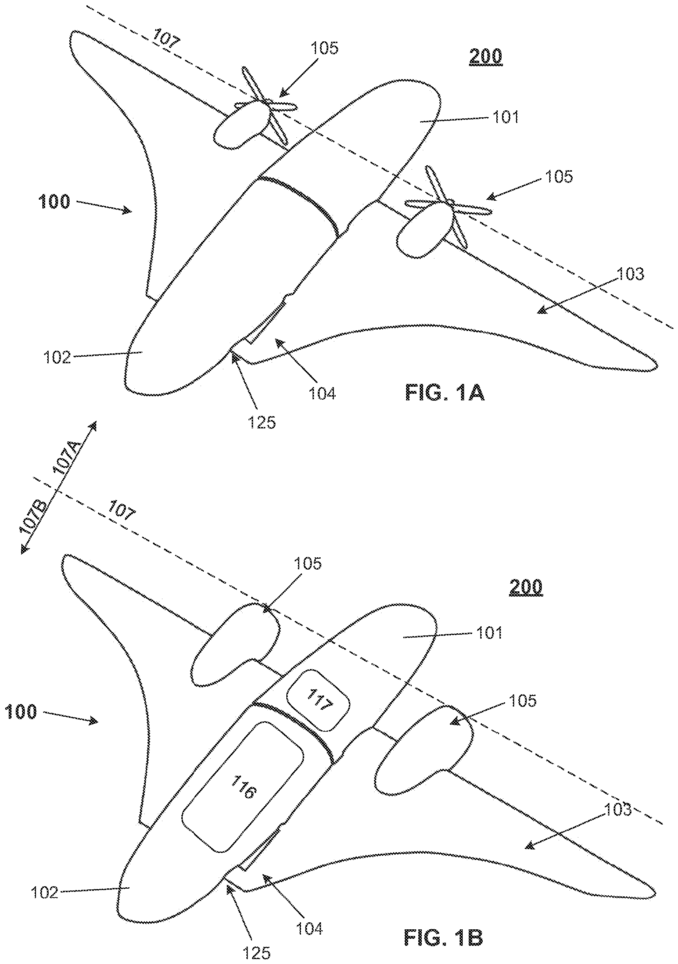

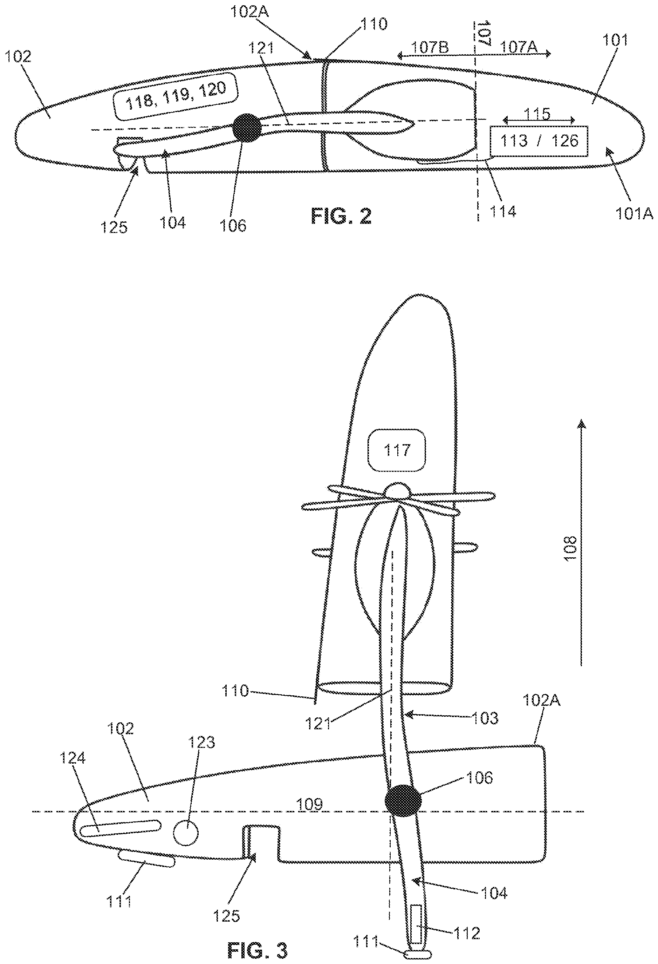

Figures 1A-1B illustrate a perspective view and Figure 2 illustrates a side view of an exemplary aircraft 200 having a structure construction 100 in a forward flying mode according to an advantageous embodiment of the invention comprising first 101 and second 102 fuselage structure portions and wing 103. A supporting structure 104 for supporting the wing 103 and the first fuselage portion 101 is also depicted. The supporting structure 104 or the wing 103 has engines 105 provided with rotating propellers, as is the case in Figure 1A or fans, as is the case in Figure 1B.

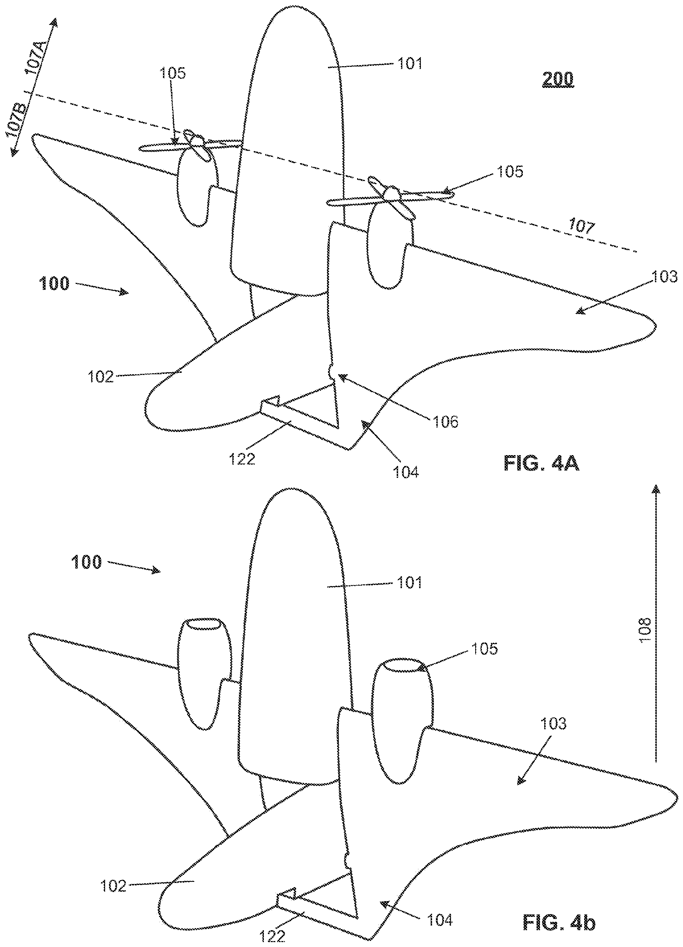

Figure 3 illustrates a side view and Figures 4A-4B illustrate a perspective view of the exemplary aircraft 200 with the structure construction 100 in a take-off, landing and/or hovering mode according to an advantageous embodiment of the invention. As can be seen e.g. in Figures 2 and 3, the supporting structure 104 is configured to be hinged 106 to the second fuselage portion 102 so that the supporting structure 104 allows turning of said wing 103 and said first fuselage portion 101 in relation to the second fuselage portion 102 to a take-off and landing modes or positions (Figure 3, 4A-4B), and to forward flying or cruising mode (Figure 1A-1B, 2). In the forward flying mode the wing 103 and the first fuselage portion 101 (or their longitudinal axis 121) are turned via help of the supporting structure 104 essentially parallel to the longitudinal axis 109 of the second fuselage portion 102. In the landing, take-offs and hovering modes the wing 103 and the first fuselage portion 101 (or their longitudinal axis 121) are turned via help of the supporting structure 104 to an upward direction 108 and essentially perpendicular to the longitudinal axis 109 of the second fuselage portion 102.

In hovering, take-off and landing the first fuselage portion 101 is essentially above the second fuselage portion 102 and the second fuselage portion is clearly at the lower level, as can be seen especially in Figures 3, 4A-4B. The second fuselage portion 102 (or its longitudinal axis 109) is configured to remain essentially in a horizontal position or plane both during take-off and landing as well as during flight, parking, loading and unloading.

The second fuselage portion 102 comprises a cockpit, cabin and/or room 116 for persons and/or cargo. In addition the structure construction 100 is configured to receive an electric power source 113, such as batteries, advantageously to the first fuselage portion 101, and in particularly to the front portion 101A of the first fuselage portion 101. The structure comprises naturally also a power transmission 114 from the power source 113 at least to the engines 105, but also to other devices need for power supply. The structure construction 100 comprises also a moving member 126 for moving 115 or changing the location of at least portion of the power sources between the take-off, landing and/or flight modes or due to changes in loading. For example the location can be moved or changed in a direction of the longitudinal axis 121 (109) of the first 101 (and/or second 102) fuselage portion, but also a lateral direction is possible.

In addition in the forward flying mode the first fuselage portion 101 extends to the front 107A of the front line 107 of the engines 105 and the second fuselage portion 102 locates mainly and essentially at the rear side 107B of the front line 107 of the engines as can be seen in Figures 1A-1B and 2. The front line 107 of the engines 105 is a line where the propeller or fan locates. According to an example at least 20 or more advantageously at least 30%, of the mass of the of the whole structure construction 100 or the aircraft 200 locates in the front side 107A of the engine line 107 at least during transition for forward flight or hovering. This allows easy and fast turning of the supporting structure 104 or the wing 103 to the forward flight mode or transition flight position via hovering mode, and vice versa, for example.

The second fuselage portion 102 may also comprise a smaller auxiliary engine 123 or ailerons or stabilizers 124 for turning the second fuselage portion 102 when the aircraft already has certain airspeed, or for keeping or helping to keep the second fuselage portion 102 in a certain position, such as essentially in a horizontal positions, when the aircraft already has suitable airspeed.

In addition according to an embodiment the supporting structure 104 may comprise a locking device 125 for locking the supporting structure 104 together with the wing 103 and first fuselage portion 101 in desired locations in relation to the second fuselage portion 102. The locking device 125 may be e.g. a mechanical locking device 125, which supports the supporting structure 104 physically to a bottom portion of the second fuselage portion 102, when the supporting structure 104 is turned around the hinge 106 essentially parallel to said second fuselage portion 102 so to the flight mode. In addition the supporting structure 104 may comprise a crossbar 122 extending from the first side of the second fuselage portion 102 to the opposite side and thereby supporting the supporting structure 104 physically to a bottom portion of the second fuselage portion 102 (as can be seen in Figures 4A, 4B).

In addition according to an example the supporting structure 104, wing 103 or first fuselage portion 101 may comprise a locking device 110, advantageously a mechanical locking device, which supports the supporting structure 104, wing 103 or first fuselage portion 101 physically to a top portion 102A of said second fuselage portion 102 (see Figures 2 and 3), when the supporting structure is turned around the hinge 106 essentially parallel to said second fuselage portion 102, so to the flight mode. For example the supporting structure 104, wing 103 or first fuselage portion 101 may comprise a crossbar extending from the first side of the second fuselage portion 102 to the opposite side and thereby supporting the supporting structure 104, wing 103 or first fuselage portion 101 physically to a top portion of the second fuselage portion 102 (not shown).

The supporting structure 104 and/or the second fuselage portion 102 may also comprise a landing gear structure 111 for supporting the supporting structure 104 or structure construction especially in and after landing, and also on the ground, when parked. Moreover the supporting structure 104 or trailing edge of the wing 103 may comprise also a shock absorber 112 for damping any impacts in landing. The structure may also comprise an emergency parachute 117, such as a rocket parachute 117. The parachute 117 is advantageously located in the first fuselage portion 101 so that the center of gravity would easily turn the first fuselage portion into the upward direction for landing, as is depicted e.g. in Figure 3.

Still in addition the aircraft 200 or the structure construction 100 comprises a data processing unit 118 and sensors 119 for determining positions of the first 101 and second 102 fuselage portions for example in relation to each other and to the ground during take-off, landing, hovering and forward flying. The data processing unit 118 is configured to control the speed and/or direction of the thrust of the engines 105 based on the data gathered by the sensors so that desired positions of the first and second fuselage portions 101, 102 are achieved and/or maintained. The direction of the thrust of the engines 105 can be advantageously controlled to control for example the turning and position of the first fuselage portion 101 (or the supporting structure 104 together with the wing 103 and the first fuselage portion 101) especially during the take-off and landing in relation to the second fuselage portion 102. As an example the engines 105 can be used for providing controllable air thrust in the vertical and/or side directions and thereby providing suitable airspeed and/or turning momentum of the aircraft. The direction of the thrust of the engines 105 can be controlled for example by turning the engines, propellers or the angle of attack of the propellers, or turning the fans. In addition the aircraft 200 or the structure construction 100 may comprise ailerons or stabilizers or guiding members for guiding air flow or draft or direction of the thrust.

In addition the aircraft 200 may comprise a device for measuring an altitude 120, such as a radar or laser or GPS positioning system, whereupon the aircraft is configured to use the altitude data to control speed and/or direction of the thrust of the engines and thereby performing said take-off, landing, hovering and forward flying. In particularly the structure construction 100 depicted in Figures are configured to allow the aircraft 200 to perform essentially vertical take-offs and landings (VTOL).

The invention has been explained above with reference to the aforementioned embodiments, and several advantages of the invention have been demonstrated. It is clear that the invention is not only restricted to these embodiments, but comprises all possible embodiments within the scope the following patent claims.

## Claims

1. A structure construction (100) for an aircraft (200),
wherein the structure construction comprises:
- first (101) and second (102) fuselage portions,
- at least one wing (103),
- a supporting structure (104) for supporting said wing (103) and said first fuselage portion (101), and
**characterized in that**
- said supporting structure (104) or the wing (103) is configured to be provided with at least one engine (105),
wherein said supporting structure (104) is configured to be hinged (106) to the second fuselage portion (102) so that said supporting structure (104) allows turning of said wing (103), of said at least one engine (105) and of said first fuselage portion (101) in relation to said second fuselage portion (102) to a take-off and landing modes and forward flying mode.

2. A structure construction of claim 1, wherein the structure construction (100) comprises engines (105) on the supporting structure (104) or on the wing (103), and the first fuselage portion (101) extends to the front (107A) of the front line (107) of the engines (105) to be received to the supporting structure (104) or wing (103).

3. A structure construction of any of previous claims, wherein the structure construction (100) comprises engines (105) on the supporting structure (104) or on the wing (103), and the second fuselage portion (102) locates, during the forward flying mode, at the rear side (107B) of the front line (107) of the engines (105) to be received to the supporting structure (104) or wing (103).

4. A structure construction of any of previous claims, wherein said wing (103) and said first fuselage portion (101) are configured to be turned via help of said supporting structure (104) to an upward direction (108) during hovering, take-off and landing in relation to said second fuselage portion.

5. A structure construction of any of previous claims, wherein said wing (103) and said first fuselage portion (101) are configured to be turned via help of said supporting structure (104) essentially parallel to said second fuselage portion (102) during flight.

6. A structure construction of any of previous claims, wherein said second fuselage portion (102) is configured to remain essentially in a horizontal position both during take-off and landing as well as during flight, parking, loading and unloading.

7. A structure construction of any of previous claims, wherein at least 20 or more advantageously at least 30%, of the mass is configured to locate in a front side (107A) of the engine line (107).

8. A structure construction of any of previous claims, wherein the second fuselage portion (102) comprises a locking device (125) for locking said supporting structure (104) with said wing (103) and first fuselage portion (101) in desired locations in relation to the second fuselage portion (102), and wherein the locking device (125) is configured to support said supporting structure (104) physically to a bottom portion of said second fuselage portion (102), when said supporting structure is essentially parallel to said second fuselage portion (102) after having turned said supporting structure (104) around the hinge (106).

9. A structure construction of any of previous claims, wherein the supporting structure (104), wing (103) or first fuselage portion (101) comprises a locking device (110), which is configured to support said supporting structure (104), wing (103) or first fuselage portion (101) physically to a portion (102A) of said second fuselage portion (102), when said supporting structure is essentially parallel to said second fuselage portion (102) after having turned said supporting structure (104) around the hinge (106).

10. A structure construction of any of previous claims, wherein the supporting structure (104) and/or the second fuselage portion (102) comprise a landing gear structure (111), advantageously a shock absorbing landing gear structure (111), configured to support said supporting structure (104) or structure construction after landing to a desired upward direction.

11. A structure construction of any of previous claims, wherein the structure construction is configured to receive an electric power source (113), such as batteries, and wherein the structure construction is configured to move or change (115) the location of at least portion of said power source between the take-off, landing and/or flight modes or due to changes in loading.

12. A structure construction of any of previous claims, wherein a cockpit and/or cabin or room (116) for persons and/or cargo is arranged in the second fuselage portion (102).

13. An aircraft (200) comprising the structure construction (100) of any of previous claims, wherein said aircraft comprises at least two engines (105) for providing controllable air thrust and thereby providing suitable airspeed and/or turning momentum.

14. An aircraft (200) of claim 13, wherein said engines (105) is configured to control the direction of the thrust and thereby controlling the turning of the first fuselage portion (101) especially during the take-off and landing in relation to said second fuselage portion (102).

15. An aircraft of any of claims 13-14, wherein the aircraft is configured to perform essentially vertical take-offs and landings.

## Patentansprüche

1. Strukturkonstruktion (100) für ein Flugzeug (200),
wobei die Strukturkonstruktion Folgendes umfasst:
- einen ersten (101) und einen zweiten (102) Rumpfabschnitt,
- mindestens eine Tragfläche (103),
- eine Stützstruktur (104) zum Stützen der Tragfläche (103) und des ersten Rumpfabschnitts (101) und
**dadurch gekennzeichnet, dass**
- die Stützstruktur (104) oder die Tragfläche (103) dafür konfiguriert ist, mit mindestens einem Triebwerk (105) versehen zu sein,
wobei die Stützstruktur (104) dafür konfiguriert ist, so an dem zweiten Rumpfabschnitt (102) angelenkt (106) zu sein, dass die Stützstruktur (104) ein Drehen der Tragfläche (103), des mindestens einen Triebwerks (105) und des ersten Rumpfabschnitts (101) im Verhältnis zu dem zweiten Rumpfabschnitt (102) zu einem Start- und einem Landemodus und einem Vorwärtsflugmodus ermöglicht.

2. Strukturkonstruktion nach Anspruch 1, wobei die Strukturkonstruktion (100) Triebwerke (105) an der Stützstruktur (104) oder an der Tragfläche (103) umfasst und sich der erste Rumpfabschnitt (101) bis zu der Vorderseite (107A) der vorderen Linie (107) der Triebwerke (105), die an der Stützstruktur (104) oder der Tragfläche (103) aufgenommen werden sollen, erstreckt.

3. Strukturkonstruktion nach einem der vorhergehenden Ansprüche, wobei die Strukturkonstruktion (100) Triebwerke (105) an der Stützstruktur (104) oder an der Tragfläche (103) umfasst und sich der zweite Rumpfabschnitt (102), während des Vorwärtsflugmodus, auf der Rückseite (107B) der vorderen Linie (107) der Triebwerke (105), die an der Stützstruktur (104) oder der Tragfläche (103) aufgenommen werden sollen, positioniert.

4. Strukturkonstruktion nach einem der vorhergehenden Ansprüche, wobei die Tragfläche (103) und der erste Rumpfabschnitt (101) dafür konfiguriert sind, während des Schwebefluges, des Startens und des Landens über eine Hilfe der Stützstruktur (104) zu einer Aufwärtsrichtung (108) im Verhältnis zu dem zweiten Rumpfabschnitt gedreht zu werden.

5. Strukturkonstruktion nach einem der vorhergehenden Ansprüche, wobei die Tragfläche (103) und der erste Rumpfabschnitt (101) dafür konfiguriert sind, während des Fluges über eine Hilfe der Stützstruktur (104) im Wesentlichen parallel zu dem zweiten Rumpfabschnitt (102) gedreht zu werden.

6. Strukturkonstruktion nach einem der vorhergehenden Ansprüche, wobei der zweite Rumpfabschnitt (102) dafür konfiguriert ist, sowohl während des Startens und des Landens als auch während des Fluges, des Abstellens, des Beladens und des Entladens im Wesentlichen in einer horizontalen Position zu verbleiben.

7. Strukturkonstruktion nach einem der vorhergehenden Ansprüche, wobei mindestens 20 % oder bevorzugterweise mindestens 30 % der Masse dafür konfiguriert ist, sich in einer Vorderseite (107A) der Triebwerkslinie (107) zu positionieren.

8. Strukturkonstruktion nach einem der vorhergehenden Ansprüche, wobei der zweite Rumpfabschnitt (102) eine Arretierungsvorrichtung (125) zum Arretieren der Stützstruktur (104) mit der Tragfläche (103) und des ersten Rumpfabschnitts (101) in gewünschten Positionen im Verhältnis zu dem zweiten Rumpfabschnitt (102) umfasst und wobei die Arretierungsvorrichtung (125) dafür konfiguriert ist, die Stützstruktur (104) physisch an einem unteren Abschnitt des zweiten Rumpfabschnitts (102) zu stützen, wenn die Stützstruktur im Wesentlichen parallel zu dem zweiten Rumpfabschnitt (102) ist, nachdem die Stützstruktur (104) um das Gelenk (106) gedreht worden ist.

9. Strukturkonstruktion nach einem der vorhergehenden Ansprüche, wobei die Stützstruktur (104), die Tragfläche (103) oder der erste Rumpfabschnitt (101) eine Arretierungsvorrichtung (110) umfasst, die dafür konfiguriert ist, die Stützstruktur (104), die Tragfläche (103) oder den ersten Rumpfabschnitt (101) physisch an einem Abschnitt (102A) des zweiten Rumpfabschnitts (102) zu stützen, wenn die Stützstruktur im Wesentlichen parallel zu dem zweiten Rumpfabschnitt (102) ist, nachdem die Stützstruktur (104) um das Gelenk (106) gedreht worden ist.

10. Strukturkonstruktion nach einem der vorhergehenden Ansprüche, wobei die Stützstruktur (104) und/oder der zweite Rumpfabschnitt (102) eine Fahrwerksstruktur (111), vorzugsweise eine stoßdämpfende Fahrwerksstruktur (111), umfassen, die dafür konfiguriert ist, die Stützstruktur (104) oder die Strukturkonstruktion nach dem Landen zu einer gewünschten Aufwärtsrichtung zu stützen.

11. Strukturkonstruktion nach einem der vorhergehenden Ansprüche, wobei die Strukturkonstruktion dafür konfiguriert ist, eine elektrische Energiequelle (113), wie beispielsweise Batterien, aufzunehmen, und wobei die Strukturkonstruktion dafür konfiguriert ist, die Position zumindest eines Abschnitts der Energiequelle zwischen dem Start-, dem Lande- und/oder dem Flugmodus oder auf Grund von Veränderungen beim Beladen zu bewegen oder zu verändern (115).

12. Strukturkonstruktion nach einem der vorhergehenden Ansprüche, wobei ein Cockpit und/oder eine Kabine oder ein Raum (116) für Personen und/oder Fracht in dem zweiten Rumpfabschnitt (102) angeordnet ist.

13. Flugzeug (200), das die Strukturkonstruktion (100) nach einem der vorhergehenden Ansprüche umfasst, wobei das Flugzeug mindestens zwei Triebwerke (105), zum Bereitstellen von steuerbarem Luftschub und dadurch Bereitstellen von geeigneter Fluggeschwindigkeit und/oder Drehmoment, umfasst.

14. Flugzeug (200) nach Anspruch 13, wobei die Triebwerke (105) dafür konfiguriert sind, die Richtung des Schubs zu steuern und dadurch das Drehen des ersten Rumpfabschnitts (101) insbesondere während des Startens und des Landens im Verhältnis zu dem zweiten Rumpfabschnitt (102) zu steuern.

15. Flugzeug nach einem der Ansprüche 13 bis 14, wobei das Flugzeug dafür konfiguriert ist, im Wesentlichen vertikale Starts und Landungen durchzuführen.

## Revendications

1. Construction de structure (100) pour aéronef (200),
dans laquelle la construction de structure comprend :
- des première (101) et deuxième (102) parties de fuselage,
- au moins une aile (103),
- une structure de support (104) pour supporter ladite aile (103) et ladite première partie de fuselage (101), et
**caractérisé en ce que**
- ladite structure de support (104) ou l'aile (103) est configurée pour être dotée d'au moins un moteur (105),
dans laquelle ladite structure de support (104) est configurée pour être articulée (106) à la deuxième partie de fuselage (102) de façon à ce que ladite structure de support (104) permette de faire tourner ladite aile (103), dudit au moins un moteur (105) et de ladite première partie de fuselage (101) par rapport à ladite deuxième partie de fuselage (102) vers un mode décollage et atterrissage et un mode vol.

2. Construction de structure selon la revendication 1, dans laquelle la construction de structure (100) comprend des moteurs (105) sur la structure de support (104) ou sur l'aile (103), et la première partie de fuselage (101) s'étend vers l'avant (107A) de la ligne frontale (107) des moteurs (105) destinés à être reçus sur la structure de support (104) ou l'aile (103).

3. Construction de structure selon l'une quelconque des revendications précédentes, dans laquelle la construction de structure (100) comprend des moteurs (105) sur la structure de support (104) ou sur l'aile (103), et la deuxième partie de fuselage (102) se situe, pendant le mode de vol, sur le côté arrière (107B) de la ligne frontale (107) des moteurs (105) destinés à être reçus sur la structure de support (104) ou l'aile (103).

4. Construction de structure selon l'une quelconque des revendications précédentes, dans laquelle ladite aile (103) et ladite première partie de fuselage (101) sont configurées pour être tournée à l'aide de ladite structure de support (104) vers une direction ascendante (108) pendant le vol stationnaire, le décollage et l'atterrissage par rapport à ladite deuxième partie de fuselage.

5. Construction de structure selon l'une quelconque des revendications précédentes, dans laquelle ladite aile (103) et ladite première partie de fuselage (101) sont configurées pour être tournée à l'aide de ladite structure de support (104) essentiellement parallèlement à ladite deuxième partie de fuselage (102) pendant le vol.

6. Construction de structure selon l'une quelconque des revendications précédentes, dans laquelle ladite deuxième partie de fuselage (102) est configurée pour rester essentiellement dans une position horizontale à la fois pendant le décollage et l'atterrissage ainsi que pendant le vol, le stationnement, le chargement et le déchargement.

7. Construction de structure selon l'une quelconque des revendications précédentes, dans laquelle au moins 20 ou plus avantageusement au moins 30 % de la masse est configurée pour se situer dans un côté avant (107A) de la ligne de moteur (107).

8. Construction de structure selon l'une quelconque des revendications précédentes, dans laquelle la deuxième partie de fuselage (102) comprend un dispositif de verrouillage (125) pour verrouiller ladite structure de support (104) avec ladite aile (103) et la première partie de fuselage (101) dans des emplacements souhaités par rapport à la deuxième partie de fuselage (102), et dans laquelle le dispositif de verrouillage (125) est configuré pour supporter ladite structure de support (104) physiquement sur une partie inférieure de ladite deuxième partie de fuselage (102), lorsque ladite structure de support est essentiellement parallèle à ladite deuxième partie de fuselage (102) après avoir fait tourner ladite structure de support (104) autour de la charnière (106).

9. Construction de structure selon l'une quelconque des revendications précédentes, dans laquelle la structure de support (104), l'aile (103) ou la première partie de fuselage (101) comprend un dispositif de verrouillage (110) qui est configuré pour supporter ladite structure de support (104), l'aile (103) ou la première partie de fuselage (101) physiquement sur une partie (102A) de ladite deuxième partie de fuselage (102), lorsque ladite structure de support est essentiellement parallèle à ladite deuxième partie de fuselage (102) après avoir fait tourner ladite structure de support (104) autour de la charnière (106).

10. Construction de structure selon l'une quelconque des revendications précédentes, dans laquelle la structure de support (104) et/ou la deuxième partie de fuselage (102) comprend une structure de train d'atterrissage (111) avantageusement une structure de train d'atterrissage absorbant les chocs (111), configurée pour supporter ladite structure de support (104) ou construction de structure après l'atterrissage vers une direction ascendante souhaitée.

11. Construction de structure selon l'une quelconque des revendications précédentes, dans laquelle la structure de construction est configurée pour recevoir une source de courant électrique (113), telle que des batteries, et dans laquelle la construction de structure est configurée pour déplacer ou modifier (115) l'emplacement d'au moins une partie de ladite source de courant entre les modes décollage, l'atterrissage et/ou vol ou du fait de changements de charge.

12. Construction de structure selon l'une quelconque des revendications précédentes, dans laquelle un cockpit et/ou une cabine ou salle (116) pour des personnes et/ou un cargo est agencé dans la deuxième partie de fuselage (102).

13. Aéronef (200) comprenant la construction de structure (100) selon l'une quelconque des revendications précédentes, dans lequel ledit aéronef comprend au moins deux moteurs (105) pour fournir une poussée d'air pouvant être commandée et fournissant ainsi une vitesse de l'air et/ou une impulsion de rotation suffisante.

14. Aéronef (200) selon la revendication 13, dans lequel lesdits moteurs (105) sont configurés pour commander la direction de la poussée et commander ainsi la rotation de la première partie de fuselage (101) particulièrement durant le décollage et l'atterrissage en relation avec ladite deuxième partie de fuselage (102).

15. Aéronef selon l'une quelconque des revendications 13 - 14, dans lequel l'aéronef est configuré pour exécuter essentiellement des décollages et atterrissages verticaux.
